(19) Europäisches Patentamt
European Patent Office
Office européen des brevets

(11) Veröffentlichungsnummer : **0 114 043**
**B1**

(12) # EUROPÄISCHE PATENTSCHRIFT

(45) Veröffentlichungstag der Patentschrift : **10.09.86**

(51) Int. Cl.[4] : **C 09 B 67/22**, D 21 H 1/46, D 21 H 3/80

(21) Anmeldenummer : **84100048.2**

(22) Anmeldetag : **04.01.84**

(54) **Farbstoffmischungen und ihre Verwendung zum Färben von Papier.**

(30) Priorität : **13.01.83 DE 3300896**

(43) Veröffentlichungstag der Anmeldung : **25.07.84 Patentblatt 84/30**

(45) Bekanntmachung des Hinweises auf die Patenterteilung : **10.09.86 Patentblatt 86/37**

(84) Benannte Vertragsstaaten : **CH DE FR GB LI**

(56) Entgegenhaltungen :
**DE-A- 3 114 088**
**DE-A- 3 120 442**
**DE-B- 1 202 920**
**US-A- 2 956 853**

(73) Patentinhaber : **BAYER AG**
**Konzernverwaltung RP Patentabteilung**
**D-5090 Leverkusen 1 Bayerwerk (DE)**

(72) Erfinder : **Beck, Ulrich, Dr.**
**Weiherstrasse 17**
**D-5303 Bornheim 3 (DE)**
Erfinder : **Stöhr, Frank-Michael, Dr.**
**Weidenweg 25**
**D-5093 Burscheid (DE)**
Erfinder : **Nickel, Horst, Dr.**
**Fontanestrasse 23**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 114 043 B1

**Beschreibung**

Gegenstand der Erfindung sind Mischungen, die
A) Phthalocyanin-Farbstoffe der Formel

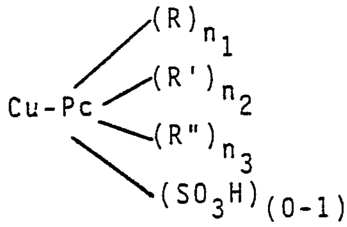

(I)

worin Cu-Pc den Rest eines Cu-Phthalocyaninfarbstoffs, mit $n_i = 0\text{-}4$ ($i = 1\text{-}3$),

$$\sum_{i=1}^{3} n_i = n$$

und

$n = 1{,}5\text{-}4$,
R, R′, R″ unabhängig voneinander einen Rest der Formel $-CH_2-Z$ oder

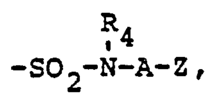

Z einen Rest der Formel

Za)

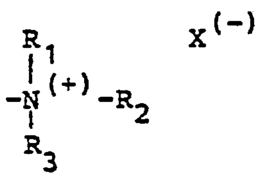

,

Zb)

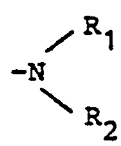

,

Zc)

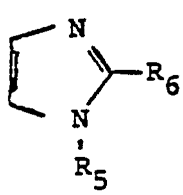

oder

Zd)

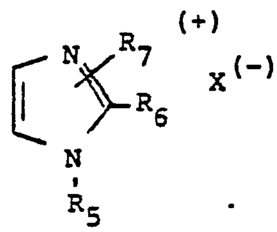

.

$R_1$, $R_2$ und $R_3$ unabhängig voneinander Wasserstoff oder gegebenenfalls substituiertes Alkyl, vorzugsweise Methyl, Ethyl, β-Amino- oder β-Hydroxyethyl bedeuten, oder

$R_1$ und $R_2$ zusammen mit dem Stickstoffatom einen gegebenenfalls ein weiteres Heteroatom enthaltenden Ring, vorzugsweise einen gegebenenfalls substituierten Morpholin-, Pyrrolidin-, Piperidin- oder Piperazin-Ring, bilden, oder

$R_1$, $R_2$ und $R_3$ zusammen mit dem Stickstoffatom einen Pyridinium- oder Picoliniumring bilden,

$R_4$ Wasserstoff oder gegebenenfalls substituiertes Alkyl, vorzugsweise Methyl, Ethyl, Hydroxymethyl oder Hydroxyethyl, oder zusammen mit $R_1$ Ethylen bedeutet,

$R_7$ an einem Stickstoffatom sitzt,

$R_5$, $R_6$ und $R_7$ unabhängig voneinander Wasserstoff oder gegebenenfalls substituiertes Alkyl, vorzugsweise Methyl, Ethyl oder Hydroxyethyl,

$R_5$ zusätzlich einen Rest der Formel

$—CO—CH_2—Z,$

$X^{(-)}$ ein Anion, vorzugsweise Chlorid, Bromid, Iodid, Sulfat, Methosulfat, Phenyl- oder Toloylsulfonat, Methansulfonat, Formiat, Acetat, Propionat, Citrat oder Lactat,

A ein Brückenglied, vorzugsweise einen Alkylenrest der Formel

$$—(CH_2)_m—$$

und

m 1, 2, 3 oder 4, bevorzugt 3 bedeuten, und

B) Azofarbstoffe der Formel

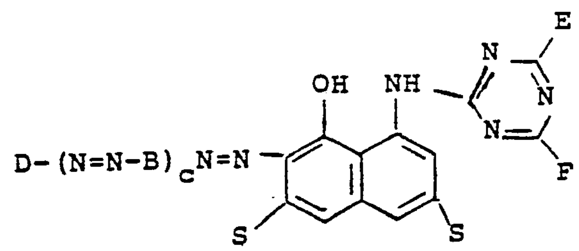

(II)

wie sie in der DE-A-32 24 786 beschrieben werden, worin

S eine Sulfonsäuregruppe oder ein gegebenenfalls inneres Salz dieser Sulfonsäuregruppe,

E Halogen, Hydroxy, Alkoxy, Alkyl, Aryl oder eine gegebenenfalls mono- oder disubstituierte Aminogruppe,

F einen Rest der Formel

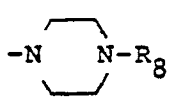 oder 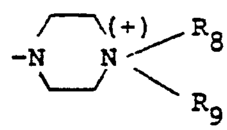 $X^{(-)}$ ,

$R_8$ und $R_9$ unabhängig voneinander Wasserstoff, Alkyl, Alkenyl oder Aralkyl,

D den Rest einer Diazokomponente der Benzol-, Naphthalin- oder heterocyclischen Reihe,

B den Rest einer Kupplungskomponente der Benzol- oder Naphthalinreihe,

c 0 oder 1 und

$X^{(-)}$ ein Anion bedeuten,

und worin die cyclischen und acyclischen Reste weitere Substituenten tragen können und worin im Farbstoffmolekül die Summe der basischen und/oder kationischen Gruppen größer als 2 ist, enthalten, und deren Verwendung zum Färben von Papier.

Als Phthalocyanin-Farbstoffe sind kationische, basische und gegebenenfalls saure Gruppen enthaltende Farbstoffe geeignet. Farbstoffe dieser Art werden z. B. in den britischen Patentschriften 784 843 und 1 013 236, in den deutschen Auslegeschriften 1 226 731 und 1 240 893, in der US-Patentschrift 4 198 203 und der CH-Patentschrift 446 578 beschrieben. Bevorzugt werden Cu-Phthalocyanin-Farbstoffe mit kationischen und/oder basischen Gruppen, die gegebenenfalls Sulfonsäuregruppen enthalten.

Von der Farbstoffen der Formel (II) sind die der Formel

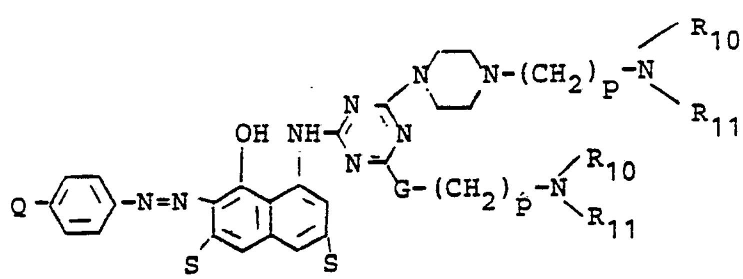

(III)

hervorzuheben, worin Q einen Rest der Formel

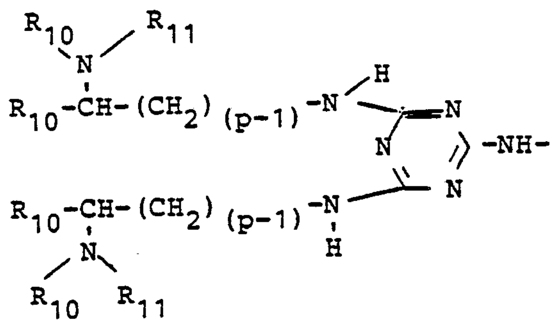

,

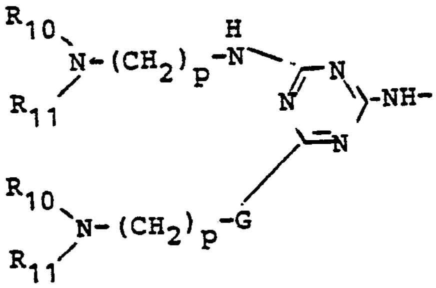

,

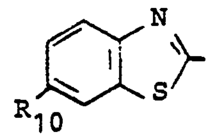

oder

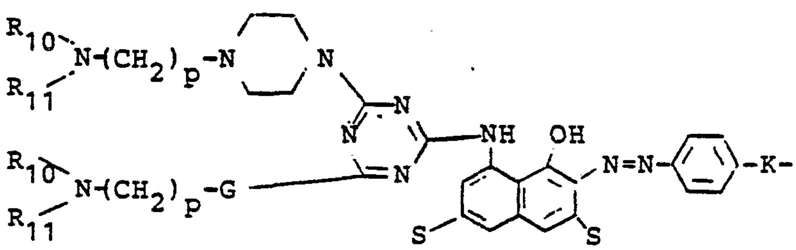

bedeutet,

$R_{10}$ und $R_{11}$ Wasserstoff, Methyl oder Ethyl,

p 2 oder 3,

G

NH oder 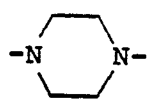

und

K eine direkte Bindung, —NH—CO—, —NHCONH—, —NHCO—$(CH_2)_p$CONH—, —$(CH_2)_p$—, —O—$(CH_2)_p$—O—, —CONH—$(CH_2)_p$NHCO— bedeuten und

S die in Formel (II) angegebene Bedeutung hat.

Besonders bevorzugte erfindungsgemäße Farbstoffmischungen bestehen aus den Komponenten der Formeln

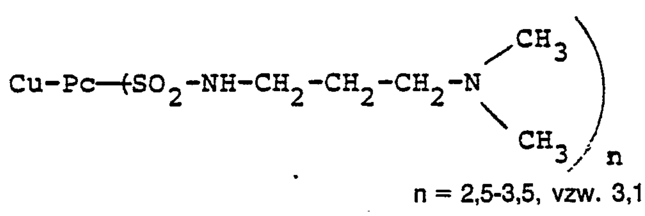

(IV)

und

n = 2,5-3,5, vzw. 3,1

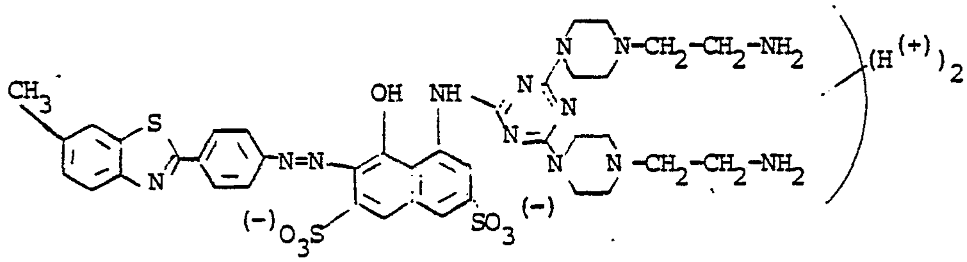

(V)

bzw. aus den Säureadditionssalzen dieser Farbstoffe, vorzugsweise der Ameisensäure, Essigsäure oder Methansulfonsäure.

Die Komponenten A und B liegen in der erfindungsgemäßen Mischung beispielsweise im Molverhältnis 8 : 1 bis 1 : 2, vorzugsweise 5 : 1 bis 1 : 1 vor.

Als Komponente A sind Türkisblau-Farbstoffe besonders geeignet, deren Spektren in wäßriger Lösung im Wellenlängenbereich von 350 bis 560 nm eine hohe Transmission (geringe Extinktion) zeigen. Die Maxima der Transmission liegen vorzugsweise im Bereich von 450 bis 490 nm, während die Transmissionsminima etwa im Bereich von 580 bis 640 nm liegen.

Als Komponente B sind Violett-Farbstoffe besonders geeignet, deren Spektren in wäßriger Lösung eine hohe Transmission im Wellenlängenbereich unter 480 nm und über 640 nm zeigen. Transmissionsminima treten im Bereich zwischen 520 und 570 nm auf.

Die erfindungsgemäßen Farbstoffmischungen liegen als Granulat, als Pulver oder in Form von Lösungen vor. Bevorzugte Handelsformen sind Lösungen, die beispielsweise einen Farbstoffgehalt von etwa 10 Gew.-% enthalten.

Überraschenderweise wurde nun gefunden, daß Papier bzw. Zellstoff mit den erfindungsgemäßen Farbstoffmischungen in klaren, neutralen blauen Farbtönen mit hoher Brillanz angefärbt werden kann. Gleichzeitig werden — auch ohne Zusatz von Hilfsmitteln wie Alaun oder Fixiermitteln — eine hohe Baderschöpfung und gute Naßechtheiten erreicht.

Das Spektrum des gefärbten Papiers zeigt im Bereich von 580-860 nm ein Transmissionsminimum und im Wellenbereich unterhalb von 480 nm ein Transmissionsmaximum.

Die Brillanz einer Färbung kann man meßtechnisch nach DIN 6174 erfassen. Ein weiterer Hinweis auf diese spektralphotometrische Analyse enthält zum Beispiel die Zeitschrift « defazet », 31. Jahrg. Nr. 8, 1977, S. 318-324.

Die erzielte hohe Brillanz der Blaufärbungen des Papiers konnte nicht generell aus dem Spektrum und der eventuellen Brillanz der wäßrigen Lösung des Gemischs geschlossen werden. In einer wäßrigen Lösung brillant erscheinende Farbstoffe können bei einer Papierfärbung relativ stumpfe Farbtöne ergeben, wenn das Aufziehverhalten unterschiedlich ist oder spezielle Zellulosefaser-Farbstoff-Wechselwirkungen auftreten.

Insbesondere werden die erfindungsgemäßen Farbstoffmischungen zum Färben von Zellstoffasern, vorzugsweise von gebleichten Fasern, in schwach saurem oder schwach alkalischem Bereich, vorzugsweise bei pH-Werten der Zellstoff-Suspension zwischen 6,5 und 7,5 angewendet.

Es ist bekannt, daß gebleichte Zellstoffasern mit anionischen substantiven Farbstoffen im Neutralbereich gefärbt werden. Insbesondere werden auch Tissue-Papiere weitgehend noch mit anionischen substantiven Farbstoffen gefärbt. Bei den steigenden ökologischen Anforderungen — Abwasserbelastung bzgl. CSB-Wert und Anfärbung — und den steigenden Anforderungen an die Ausblutechtheiten der gefärbten Papiere — zum Beispiel von Servietten oder Hygiene-Papieren — erweisen sich anionischsubstantive Farbstoffe jedoch als nicht ausreichend hinsichtlich dieser neuen Erfordernisse.

Mit den anionischen Farbstoffen können zwar prinzipiell klare Blautöne erhalten werden. Will man jedoch neben der Klarheit des Farbtons auch eine hohe Baderschöpfung und eine gute Ausblutechtheit gegen Wasser, Alkohol, Seife und Milch von mindestens 4 erreichen, muß man bei anionischsubstantiven Farbstoffen zum Färben von Tissue-Qualitäten im pH-Bereich um 7 zusätzlich Alaun und ein Fixierhilfsmittel, zum Beispiel ein Dicyandiamidformaldehyd-Kondensations-Produkt, einsetzen. Hierdurch verlieren die Färbungen jedoch an Klarheit, sie werden oft sogar stumpf.

Hohe Baderschöpfung und Ausblutechtheit bei klaren bis brillanten Blaufarbtönen erreicht man mit den erfindungsgemäßen Mischungen ohne den zusätzlichen Einsatz von Fixiermitteln oder Alaun.

Die Farbstoffkomponenten A und B können als fertige Mischungen oder auch getrennt dem Substrat zugeführt werden. Die erfindungsgemäßen Mischungen werden dann also erst auf dem Substrat oder in der Zellstoffsuspension hergestellt.

Als Lösungsmittel für den Reinfarbstoff werden bevorzugt : Wasser, Alkohole wie Methanol, Ethanol, Propanol sowie Glykole, Glykolether, vorzugsweise Ethylenglykol, Carbonsäureamide, vorzugsweise Dimethylformamid sowie Lösungsvermittler wie Harnstoff, Dimethylharnstoff, Caprolactam, Hydroxypropionitril sowie organische Säuren wie Ameisensäure, Essigsäure und Methansulfonsäure.

Die Verwendung zum Färben von Papier erfolgt nach herkömmlichen Verfahren. Vorzugsweise werden die Farbstoffmischungen zum Färben in der Masse verwendet. Hierbei werden die Lösungen der Komponenten A und B gemischt oder getrennt dem sog. Dünnstoff oder Dickstoff vor dem Erreichen des Stoffauflaufs zugegeben. Beispielsweise werden zu einer 1 %igen Suspension von gebleichten Zellstoffasern ca. $3 \cdot 10^{-3}$ Mol (bezogen auf 10 g Fasern pro Liter Suspension) der Komponente A und ca. $1 \cdot 10^{-3}$ Mol der Komponente B (bezogen auf 10 g Fasern pro Liter Suspension) gegeben.

Weitere Appliziermöglichkeiten sind folgende :

Entweder man sprüht eine Lösung des Gemisches auf das Papier auf oder aber man fährt das ungefärbte Papier vor Erreichen der Trockenpartie durch eine Leimpresse, in deren Trog sich die Lösung des erfindungsgemäßen Gemisches befindet. Das durch Besprühen oder Eintauchen gefärbte Papier wird anschließend in der Trockenpartie getrocknet.

### Beispiel A

Ein aus 50 % gebleichtem Birkensulfatzellstoff und 50 % Fichtensulfatzellstoff bestehender Trockenstoff wird im Holländer mit Wasser angeschlagen und bis zum Mahlgrad 35 °SR gemahlen, so daß der Trockengehalt etwas über 2,5 % liegt, und anschließend mit Wasser auf exakt 2,5 % Trockengehalt des Dickstoffs eingestellt.

Der pH-Wert der Suspension wird auf 7 eingestellt. 200 Gew.-Teile des Dickstoffs werden mit 10 Gew.-Teilen einer 0,5 %igen wäßrigen Lösung der in den Beispielen 1-11 hergestellten Einstellungen versetzt und 5 Min. verrührt. Der erhaltene Papierbrei wird mit 500 Teilen Wasser verdünnt. Daraus werden in üblicher Weise durch Absaugen über einem Blattbildner Papierblätter hergestellt.

Bei den in den folgenden Beispielen angegebenen Teilen handelt es sich um Gewichtsteile.

## Beispiel 1a

Man mischt 1,9 Teile der Farbstofflösung aus 14 Teilen des Cu-Pc-Farbstoffs der Formel (IV) n = 3,1, gelöst in Eisessig, Methanol und Wasser und 1,0 Teil der Farbstofflösung aus 10 Teilen des Azo-Farbstoffs (V), gelöst in Ameisensäure, Methansulfonsäure und Wasser.

Verwendet man diese Lösung nach Beispiel A, so erhält man ein in einem neutralen, brillanten Blau gefärbtes Papierblatt mit hoher Ausblutechtheit (Wasser : E = 5 ; Alkohol : E = 5 ; Seifen : E = 5 ; Milchsäure : E = 5. Die Bestimmung erfolgte nach DIN 53 991). Der Farbstoffgehalt im Abwasser liegt unter 4 %.

Der Farbstoffgehalt im Abwasser wurde photometrisch ermittelt. Die Prozentangabe in den Beispielen bezieht sich auf die Restmenge an Farbstoff im Abwasser verglichen mit der ursprünglich zugegebenen Farbstoffmenge.

## Beispiel 1b

Brillante Blaufärbungen mit hoher Ausblutechtheit werden auch erhalten, wenn man anstelle des Farbstoffs (V) die folgenden in Ameisensäure, Methansulfonsäure und Wasser gelösten Farbstoffe einsetzt :

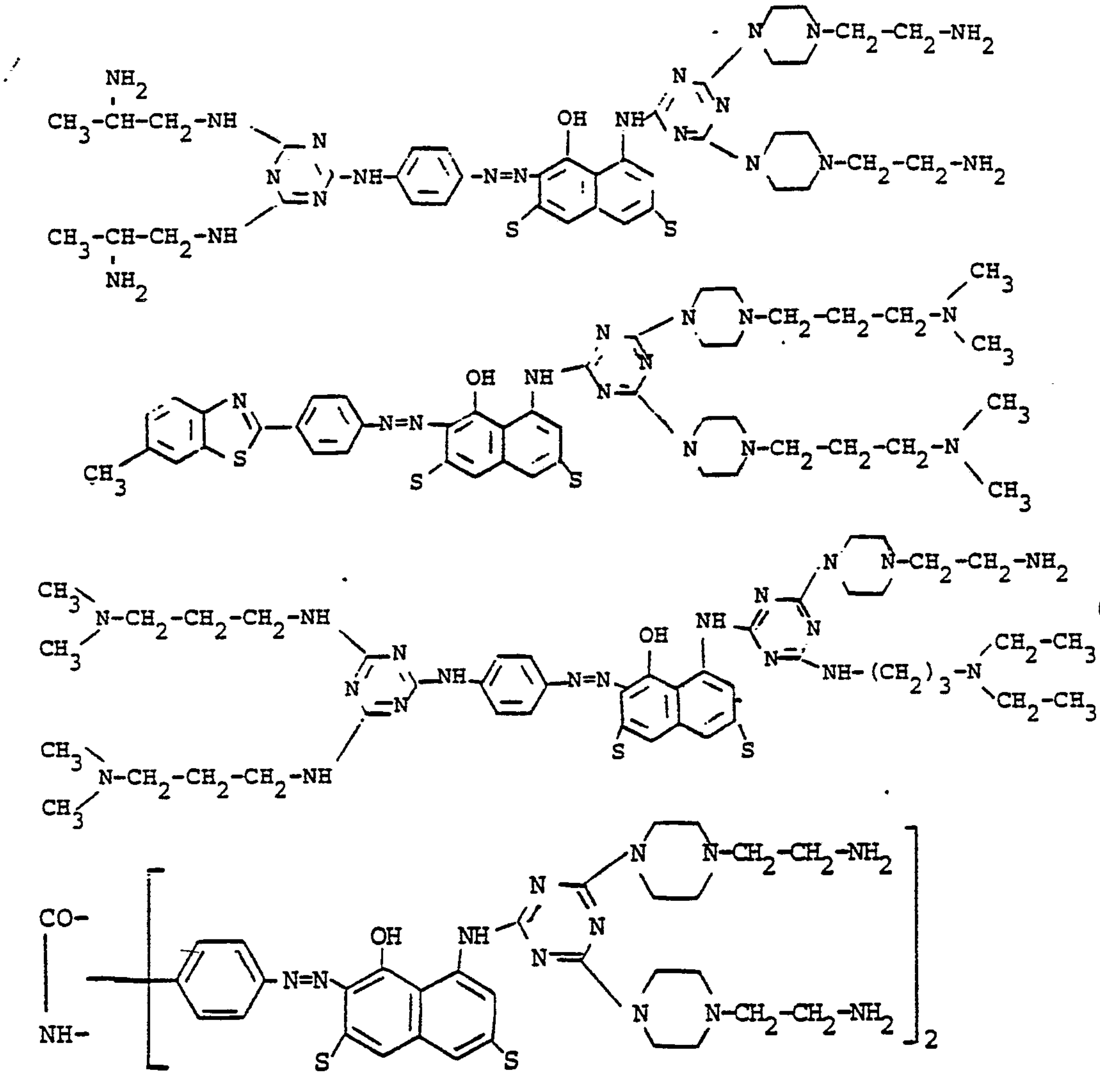

(VI)

(VII)

(VIII)

(IX)

Man mischt 2 Teile der Farbstofflösung aus 14 Teilen des Cu-Pc-Farbstoffs der Formel IV (n = 3,1), gelöst in Eisessig, Methanol und Wasser und 0,9 Teile der Farbstofflösung aus alternativ 10 Teilen des Azofarbstoffs der Formel VI, VII, VIII oder IX.

Verwendet man diese Lösungen nach Beispiel A, so erhält man ein in einem neutralen, brillanten Blau gefärbtes Papierblatt mit hoher Ausblutechtheit (Wasser : E = 5 ; Alkohol : E = 4-5 ; Seifen : 4-5 ; Milchsäure : 5). Der Farbstoffgehalt im Abwasser liegt unter 5 %.

Beispiel 2

Man mischt 3,3 Teile der Farbstofflösung aus 19 Teilen des Farbstoffs der Formel

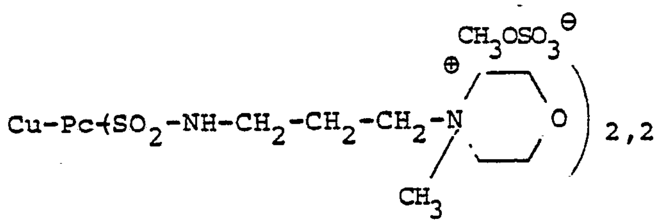

(X)

gelöst in Ameisensäure und Wasser, und 1,0 Teil der Azo-Farbstofflösung aus 10 Teilen des Azofarbstoffs IX, gelöst in Ameisensäure, Methansulfonsäure und Wasser.

Verwendet man diese Lösung nach Beispiel A, so erhält man ein in einem neutralen, brillanten Blau gefärbtes Papierblatt mit hoher Ausblutechtheit (Wasser : E = 5 ; Alkohol : E = 5 ; Seifen : E = 5 ; Milchsäure : E = 4). Der Farbstoffgehalt im Abwasser liegt unter 4 %.

Beispiel 3

Man mischt 3,4 Teile der Farbstofflösung aus 15 Teilen des Farbstoffs der Formel

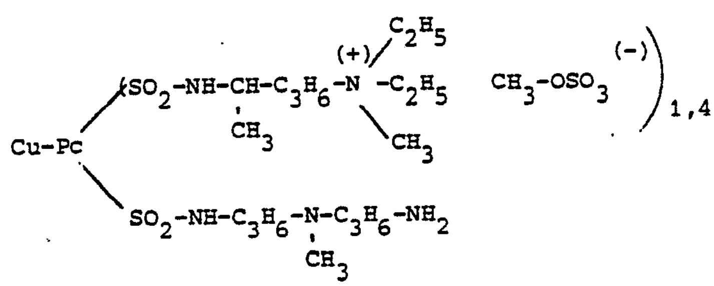

(XI)

gelöst in Eisessig und Wasser und 1,2 Teile der Azofarbstoff-Lösung aus 12 Teilen des Azofarbstoffs VII, gelöst in Ameisensäure, Methansulfonsäure und Wasser.

Verwendet man diese Lösung nach Beispiel A, so erhält man ein in einem schwach rotstichigen, brillanten Blau gefärbtes Papierblatt mit hoher Ausblutechtheit (Wasser : E = 5 ; Alkohol : E = 4). Der Farbstoffgehalt im Abwasser liegt unter 5 %.

Beispiel 4

Man mischt 3,5 Teile der Farbstofflösung aus 15 Teilen des Farbstoffs der Formel

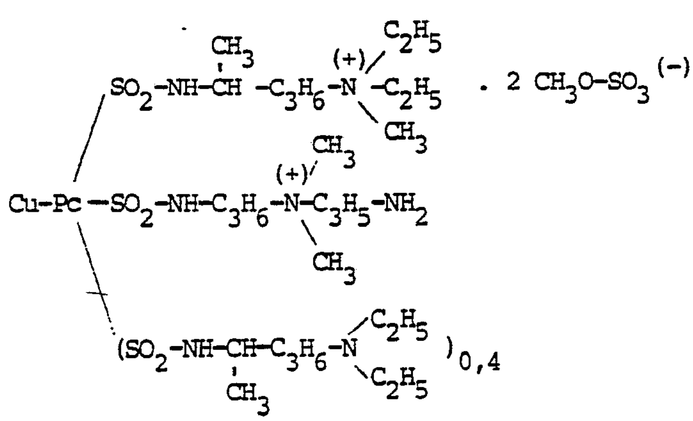

(XII)

gelöst in Eisessig und Wasser und 1,5 Teile der Azofarbstoff-Lösung aus 10 Teilen des Azofarbstoffs VIII, gelöst in Ameisensäure, Methansulfonsäure und Wasser.

Verwendet man diese Lösung nach Beispiel A, so erhält man ein in einem schwach rotstichigen,

Verwendet man diese Lösung nach Beispiel A, so erhält man ein in einem schwach rotstichigen, brillanten Blau gefärbtes Papierblatt mit hoher Ausblutechtheit (Wasser : E = 5 ; Alkohol : E = 4-5 Zitronemsäure : E = 4). Der Farbstoffgehalt im Abwasser liegt unter 4 %.

Weitere Blaumischungen erhält man, wenn man die folgenden Farbstoffe untereinander mischt :

(Siehe Tabelle Seite 9 f.)

| Beispiel Nr. | Teile der Türkisblau-Lösung aus Beispiel | Teile der Violett-Lösung aus Beispiel |
|---|---|---|
| 5 | 3,5 Teile aus Beispiel 2 | 0,8 Teile aus Beispiel 1b, Farbstoff-Formel Nr. VI |
| 6 | 3,5 Teile aus Beispiel 2 | 0,8 Teile aus Beispiel 1b, Farbstoff-Formel Nr. VII |
| 7 | 3,6 Teile aus Beispiel 2 | 0,7 Teile aus Beispiel 1a, Farbstoff-Formel Nr. V |
| 8 | 3,4 Teile aus Beispiel 3 | 1,2 Teile aus Beispiel 1b, Farbstoff-Formel Nr. VIII |
| 9 | 3,4 Teile aus Beispiel 3 | 1,4 Teile aus Beispiel 1b, Farbstoff-Formel Nr. IX |
| 10 | 3,5 Teile aus Beispiel 4 | 1,5 Teile aus Beispiel 1b, Farbstoff-Formel Nr. IX |

## Patentansprüche

1. Mischungen, die
A) eine Farbstoff der Formel

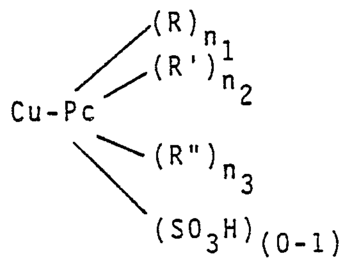

worin Cu-Pc den Rest eines Cu-Phthalocyaninfarbstoffs, mit $n_i = 0\text{-}4$ ($i = 1\text{-}3$),

$$\sum_{i=1}^{3} n_i = n \quad \text{und}$$

$n = 1{,}5\text{-}4$,
R, R′, R″ unabhängig voneinander einen Rest der Formel

$-CH_2-Z$ oder 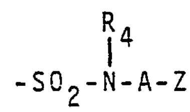 ,

Z einen Rest der Formel

Za)

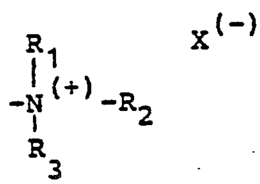

,

Zb)

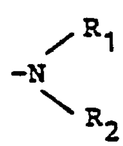

,

Zc)

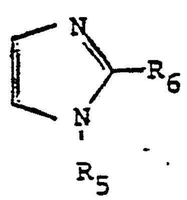

oder

Zd)

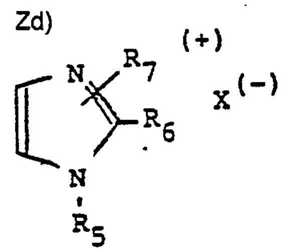

$R_1$, $R_2$ und $R_3$ unabhängig voneinander Wasserstoff oder gegebenenfalls substituiertes Alkyl bedeuten, oder
$R_1$ und $R_2$ zusammen mit dem Stickstoffatom einen gegebenenfalls ein weiteres Heteroatom enthaltenden Ring oder
$R_1$, $R_2$ und $R_3$ zusammen mit dem Stickstoffatom einen Pyridinium- oder Picoliniumring bilden,
$R_4$ Wasserstoff, gegebenenfalls substituiertes Alkyl oder zusammen mit $R_1$ Ethylen,
$R_7$ an einem Stickstoffatom sitzt,
$R_5$, $R_6$ und $R_7$ unabhängig voneinander Wasserstoff oder gegebenenfalls substituiertes Alkyl,
$R_5$ zusätzlich einen Rest der Formel $-CO-CH_2-Z$,
$X^{(-)}$ ein Anion und
A ein Brückenglied bedeuten,
und
B) einen Farbstoff der Formel

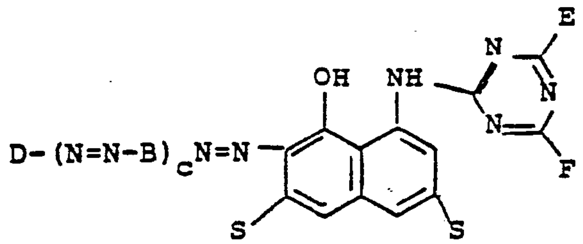

worin

S eine Sulfonsäuregruppe oder ein gegebenenfalls inneres Salz dieser Sulfonsäuregruppe,

E Halogen, Hydroxy, Alkoxy, Alkyl, Aryl oder eine gegebenenfalls mono- oder di-substituierte Aminogruppe,

F einen Rest der Formel

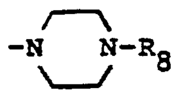 oder 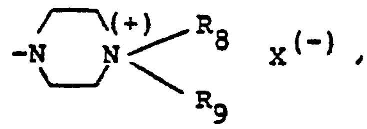 ,

$R_8$ und $R_9$ unabhängig voneinander Wasserstoff, Alkyl, Alkenyl oder Aralkyl,

D den Rest einer Diazokomponente der Benzol-, Naphthalin- oder heterocyclischen Reihe,

B den Rest einer Kupplungskomponente der Benzol- oder Naphthalinreihe,

c 0 oder 1 und

$X^{(-)}$ ein Anion bedeuten,

und worin die cyclischen und acyclischen Reste weitere Substituenten tragen können und worin im Farbstoffmolekül die Summe der basischen und/oder kationischen Gruppen größer als 2 ist, enthalten.

2. Mischungen gemäß Anspruch 1, die als Komponente A) einen Farbstoff der Formel des Anspruchs 1 enthalten, worin

$R_1$, $R_2$ und $R_3$ unabhängig voneinander Wasserstoff, Methyl, Ethyl, β-Amino- oder β-Hydroxyethyl bedeuten, oder

$R_1$ und $R_2$ zusammen mit dem Stickstoffatom einen gegebenenfalls substituierten Morpholin-, Pyrrolidin-, Piperidin- oder Piperazinring bilden, oder

$R_1$, $R_2$ und $R_3$ zusammen mit dem Stickstoffatom einen Pyridinium- oder Picoliniumring bilden,

$R_4$ Wasserstoff, Methyl, Ethyl, Hydroxymethyl oder Hydroxyethyl oder zusammen mit $R_1$ Ethylen,

$R_5$, $R_6$, und $R_7$ unabhängig voneinander Wasserstoff, Methyl, Ethyl oder Hydroxyethyl,

$R_5$ zusätzlich einen Rest der Formel $-CO-CH_2-Z$,

$X^{(-)}$ Chlorid, Bromid, Iodid, Sulfat, Methosultat, Phenyl- oder Toloylsulfonat, Methansulfonat, Formiat, Acetat, Propionat, Citrat oder Lactat,

A einen Alkylenrest der Formel $-(CH_2)_m-$

und

m 1, 2, 3 oder 4, bevorzugt 3, bedeuten.

3. Mischungen gemäß Anspruch 1, die als Komponente B) einen Farbstoff der Formel

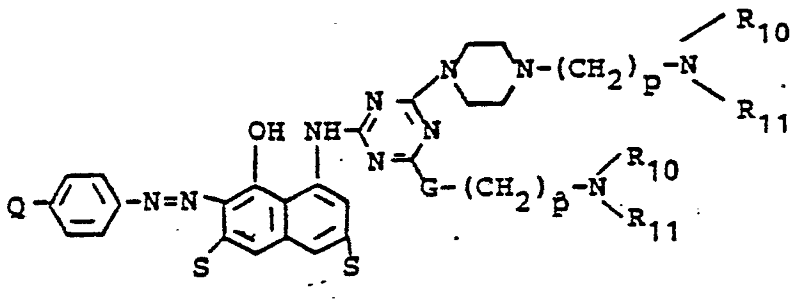

enthalten, worin

Q einen Rest der Formel

(Siehe Schema Seite 12 f.)

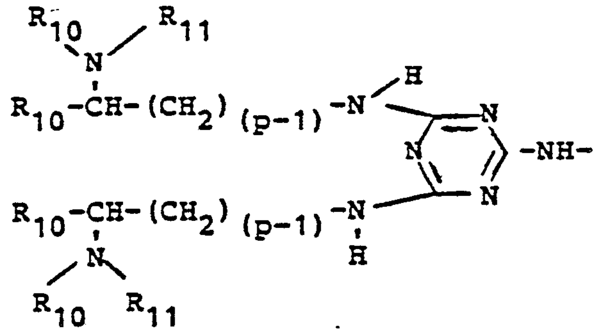,

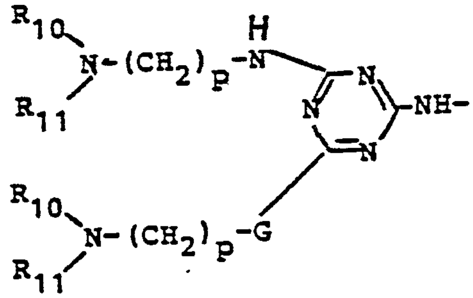, 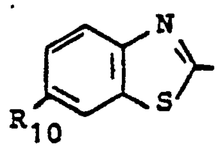 oder

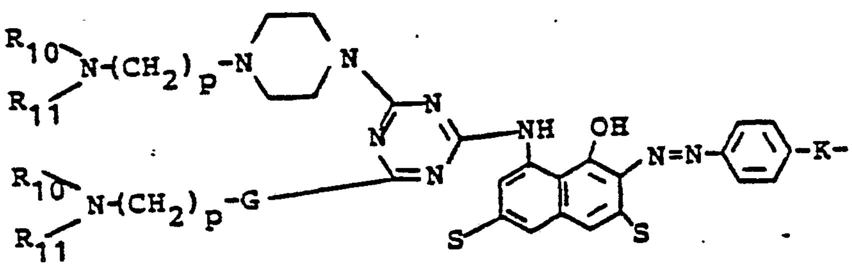

bedeutet,

$R_{10}$ und $R_{11}$ Wasserstoff, Methyl oder Ethyl,
p 2 oder 3
G NH oder

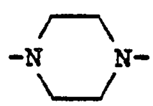

und

K eine direkte Bindung, —NH—CO—, —NHCONH—, —NHCO—$(CH_2)_p$CONH—, —$(CH_2)_p$—, —O—$(CH_2)_p$—O—, —CONH—$(CH_2)_p$NHCO— bedeuten und

S die in Anspruch 1 angegebene Bedeutung hat.

4. Mischungen gemäß Anspruch 1 aus einem Phthalocyanin-Farbstoff der Formel

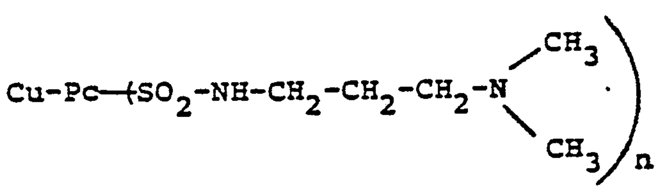

n = 2,5-3,5, vzw. 3,1

und einem Azofarbstoff der Formel

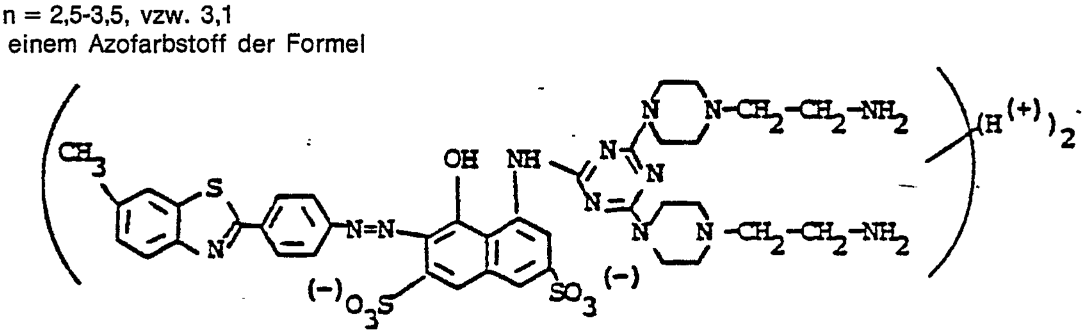

5. Mischungen gemäß Anspruch 1, die die Komponenten A) und B) im Molverhältnis 8 : 1 bis 1 : 2. enthalten.

6. Verwendung der Mischungen des Anspruchs 1 zum Färben von Papier.

**Claims**

1. Mixtures which contain

A) a dyestuff of the formula

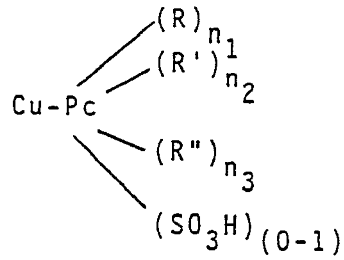

wherein Cu-Pc denotes the radical of a Cu-phthalocyanine dyestuff with $n_i = 0\text{-}4$ ($i = 1\text{-}3$),

$$\sum_{i=1}^{3} n_i = n \quad \text{and}$$

$n = 1.5\text{-}4$,

R, R' and R'' independently of one another denote a radical of the formula

$-CH_2-Z$ or 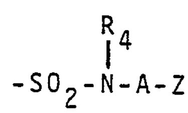 ,

Z denotes a radical of the formula

Za)

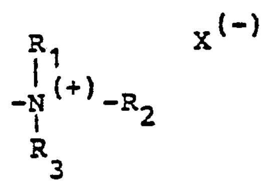

,

Zb)

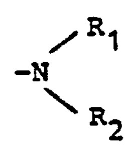

,

Zc)

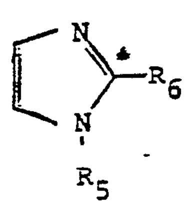

or

Zd)

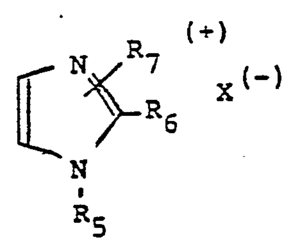

$R_1$, $R_2$ and $R_3$ independently of one another denote hydrogen or optionally substituted alkyl, or $R_1$ and $R_2$, together with the nitrogen atom, form a ring optionally containing a further hetero atom or $R_1$, $R_2$ and $R_3$, together with the nitrogen atom, form a pyridinium or picolinium ring,

$R_4$ denotes hydrogen, optionally substituted alkyl or, together with $R_1$, ethylene,

$R_7$ is positioned on a nitrogen atom,

$R_5$, $R_6$ and $R_7$, independently of one another, denote hydrogen or optionally substituted alkyl, $R_5$ additionally denotes a radical of the formula —CO—$CH_2$—Z, $X^{(-)}$ denotes an anion and A denotes a bridge member,

and

B) a dyestuff of the formula

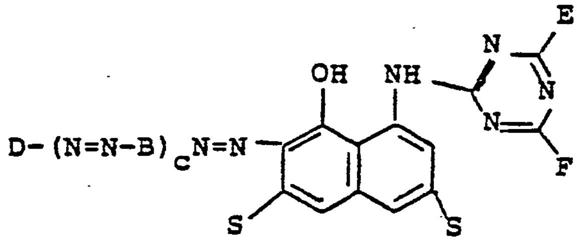

wherein

S denotes a sulphonic acid group or an optionally inner salt of this sulphonic acid group,

E denotes halogen, hydroxyl, alkoxy, alkyl, aryl or an optionally mono- or disubstituted amino group,

F denotes a radical of the formula

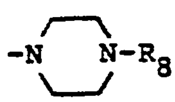

or

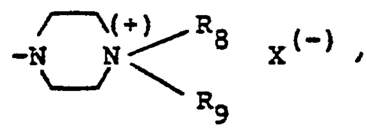

$R_8$ and $R_9$, independently of one another, denote hydrogen, alkyl, alkenyl or aralkyl,

D denotes the radical of a diazo component of the benzene, naphthalene or heterocyclic series,

B denotes the radical of a coupling component of the benzene or naphthalene series,

c denotes 0 or 1 and

$X^{(-)}$ denotes an anion,

and wherein the cyclic and acyclic radicals can carry further substituents and wherein in the dyestuff molecule the sum of the basic and/or cationic groups is greater than 2.

2. Mixtures according to Claim 1, which contain, as component A), a dyestuff of the formula of Claim 1, wherein

$R_1$, $R_2$ and $R_3$ independently of one another denote hydrogen, methyl, ethyl, β-amino- or β-hydroxyethyl, or

$R_1$ and $R_2$, together with the nitrogen atom, form an optionally substituted morpholine, pyrrolidine, piperidine or piperazine ring, or

$R_1$, $R_2$ and $R_3$, together with the nitrogen atom, form a pyridinium or picolinium ring,

$R_4$ denotes hydrogen, methyl, ethyl, hydroxymethyl or hydroxyethyl or, together with $R_1$, ethylene,

$R_5$, $R_6$ and $R_7$, independently of one another, denote hydrogen, methyl, ethyl or hydroxyethyl,

$R_5$ additionally denotes a radical of the formula —CO—$CH_2$—Z,

$X^{(-)}$ denotes chloride, bromide, iodide, sulphate, methosulphate, phenyl or toloyl sulphonate, methane sulphonate, formate, acetate, propionate, citrate or lactate,

A denotes an alkylene radical of the formula $-(CH_2)_m-$

and

m denotes 1, 2, 3 or 4, preferably 3.

3. Mixtures according to Claim 1 which contain, as component B), a dyestuff of the formula

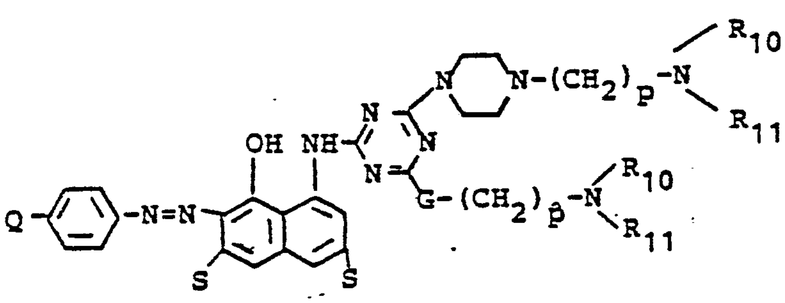

wherein

Q denotes a radical of the formula

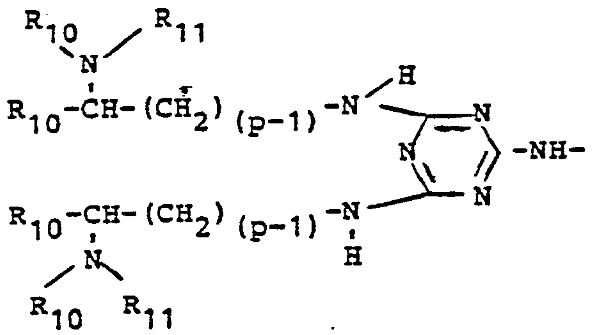,

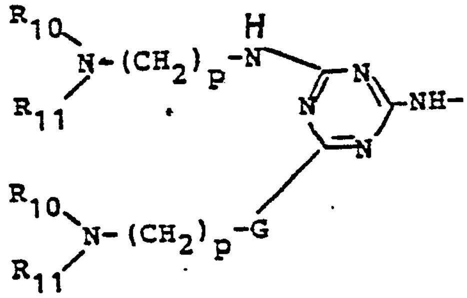, 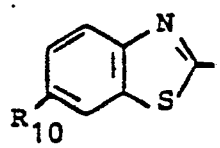 or

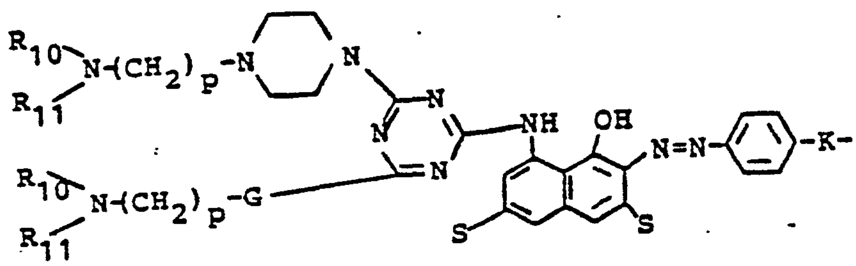

$R_{10}$ and $R_{11}$ denote hydrogen, methyl or ethyl,
p denotes 2 or 3,
G denotes NH or

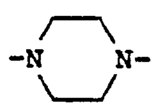

and
K denotes a direct bond, —NH—CO—, —NHCONH—, —NHCO—$(CH_2)_p$CONH—, —$(CH_2)_p$—, —O—$(CH_2)_p$—O—, —CONH—$(CH_2)_p$NHCO—
and
S has the meaning given in Claim 1.

4. Mixtures according to Claim 1, of a phthalocyanine dyestuff of the formula

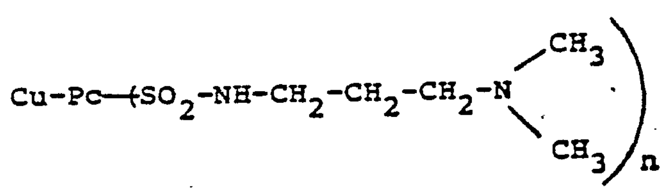

n = 2.5-3.5, preferably 3.1
and an azo dyestuff of the formula

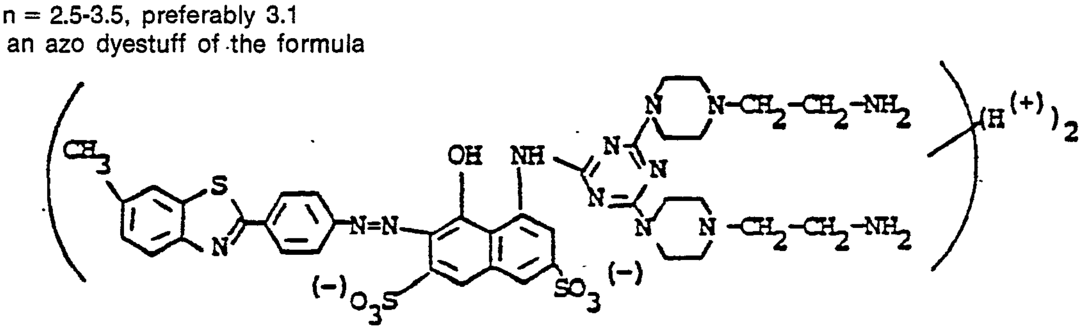

5. Mixtures according to Claim 1 which contain the components A) and B) in a molar ratio of 8 : 1 to 1 : 2.

6. Use of the mixtures of Claim 1 for dyeing paper.

**Revendications**

1. Mélanges contenant

A) un colorant de formule

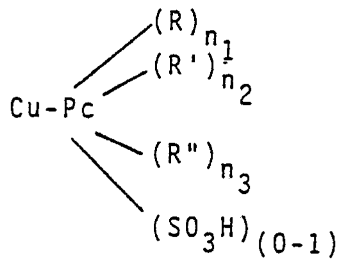

dans laquelle Cu-Pc représente le reste d'un colorant de phtalocyanine de cuivre, avec $n_i$ = 0-4 (i = 1-3)

$$\sum_{i=1}^{3} n_i = n \quad \text{et}$$

n = 1,5-4,

R, R', R'' représentent chacun, indépendamment les uns des autres, un groupe de formule

$-CH_2-Z$ ou 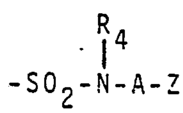 ,

Z représente un groupe de formule

Za)

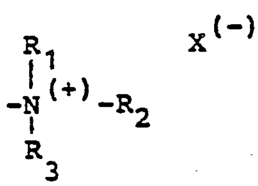 ,

Zb)

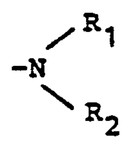 ,

Zc)

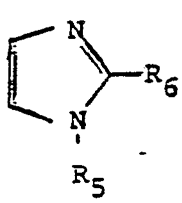

ou

Zd)

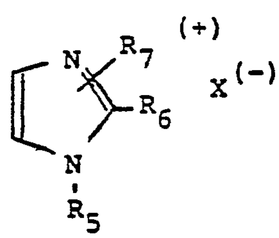

$R_1$, $R_2$ et $R_3$ représentent chacun, indépendamment les uns des autres, l'hydrogène ou un groupe alkyle éventuellement substitué, ou bien

$R_1$ et $R_2$ forment ensemble et avec l'atome d'azote un cycle contenant éventuellement un autre hétéroatome, ou bien

$R_1$, $R_2$ et $R_3$ forment ensemble et avec l'atome d'azote un cycle pyridinium ou picolinium,

$R_4$ représente l'hydrogène, un groupe alkyle éventuellement substitué, ou forme avec $R_1$ un groupe éthylène,

$R_7$ est relié directement à l'atome d'azote,

$R_5$, $R_6$ et $R_7$ représentent chacun, indépendamment les uns des autres, l'hydrogène ou un groupe alkyle éventuellement substitué,

$R_5$ peut représenter en outre un groupe de formule $—CO—CH_2—Z—$

$X^{(-)}$ représente un anion et

A représente un pont,

et

B) un colorant de formule

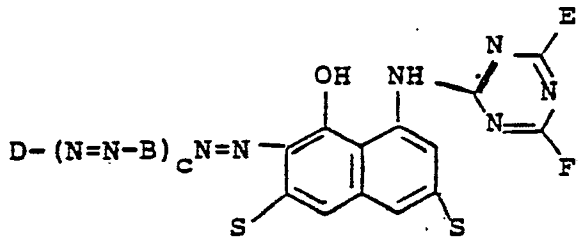

dans laquelle

S représente un groupe acide sulfonique ou un sel, éventuellement interne, de ce groupe acide sulfonique,

E représente un halogène, un groupe hydroxy, alcoxy, alkyle, aryle ou un groupe amino éventuellement mono- ou di-substitué,

F représente un groupe de formule

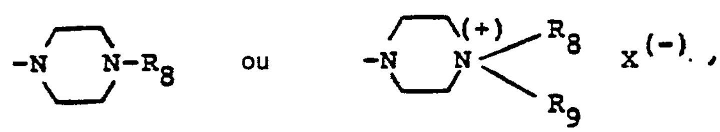

$R_8$ et $R_9$ représentent chacun, indépendamment l'un de l'autre, l'hydrogène, un groupe alkyle, alcényle ou aralkyle,

D est le reste d'un composant diazotable de la série benzénique, naphtalénique ou hétérocyclique,

B est le reste d'un copulant de la série benzénique ou naphtalénique,

c est égal à 0 ou 1 et

$X^{(-)}$ représente un anion,

les groupes cycliques et acycliques pouvant porter d'autres substituants, et la somme des groupes basiques et/ou cationiques de la molécule de colorant étant supérieure à 2.

2. Mélanges selon la revendication 1 contenant en tant que composant A un colorant à la formule de la revendication 1, dans laquelle

$R_1$, $R_2$ et $R_3$ représentent chacun, indépendamment les uns des autres, l'hydrogène, un groupe méthyle, éthyle, bêta-amino- ou bêta-hydroxyéthyle ou bien

$R_1$ et $R_2$ forment ensemble et avec l'atome d'azote un cycle morpholine, pyrrolidine, pipéridine ou pipérazine éventuellement substitué, ou bien

$R_1$, $R_2$ et $R_3$ forment ensemble et avec l'atome d'azote un cycle pyridinium ou picolinium,

$R_4$ représente l'hydrogène, un groupe méthyle, éthyle, hydroxyméthyle ou hydroxyéthyle ou forme avec $R_1$ un groupe éthylène,

$R_5$, $R_6$ et $R_7$ représentent chacun, indépendamment les uns des autres, l'hydrogène, un groupe méthyle, éthyle ou hydroxyéthyle,

$R_5$ peut en outre représenter un groupe de formule $—CO—CH_2—Z$,

$X^{(-)}$ représente un ion chlorure, bromure, iodure, sulfate, méthyl-sulfate, phényl- ou toluyl-sulfonate, méthane-sulfonate, formiate, acétate, propionate, citrate ou lactate,

A est un groupe alkylène de formule $—(CH_2)_m—$

et

m est égal à 1, 2, 3 ou 4, de préférence à 3.

3. Mélanges selon la revendication 1, contenant en tant que composant B un colorant de formule

(Siehe Schema Seite 18 f.)

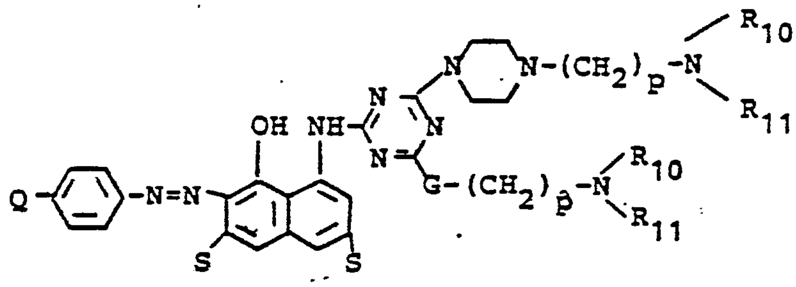

dans laquelle

Q représente un groupe de formule

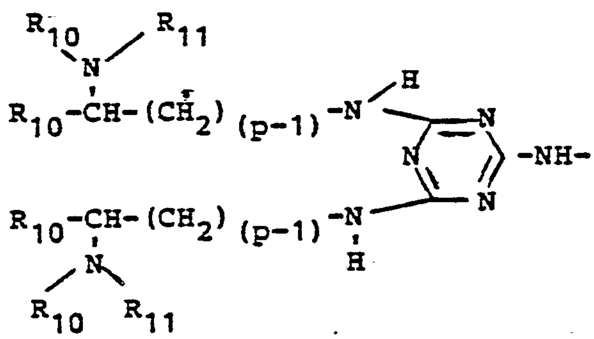

,

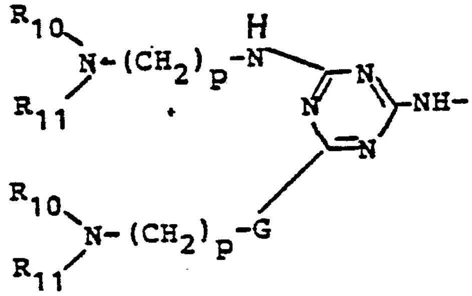

,

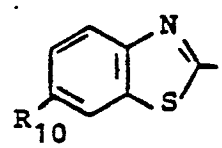

ou

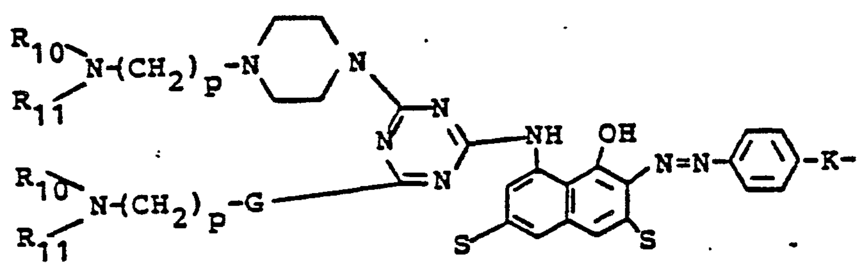

$R_{10}$ et $R_{11}$ représentent l'hydrogène, des groupes méthyle ou éthyle,

p est égal à 2 ou 3,

G représente NH ou

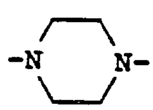

et

K représente une liaison directe, un groupe —NH—CO—, —NHCONH—, —NHCO—$(CH_2)_p$CONH—, —$(CH_2)_p$—, —O—$(CH_2)_p$—O—, —CONH—$(CH_2)_p$NHCO—, et

S a les significations indiquées dans la revendication 1.

4. Mélanges selon la revendication 1, consistant en un colorant de phtalocyanine de formule

(Siehe Schema Seite 19 f.)

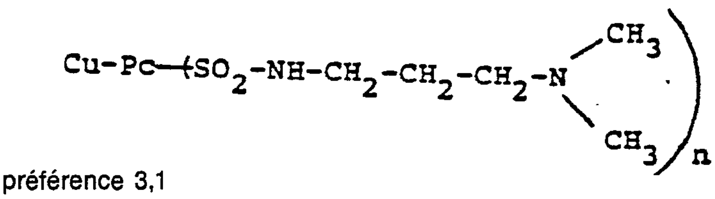

n = 2,5-3,5, de préférence 3,1
et un colorant azoïque de formule

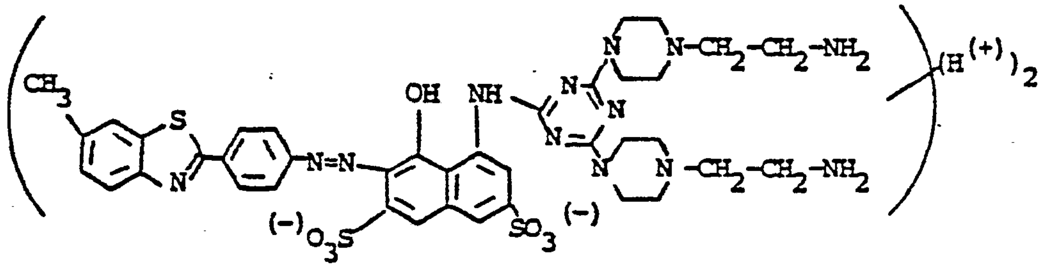

5. Mélanges selon la revendication 1, contenant les composants A et B dans un rapport molaire de 8 : 1 à 1 : 2.

6. Utilisation des mélanges de la revendication 1 pour la coloration du papier.